# EUROPEAN PATENT APPLICATION

(11) **EP 4 604 289 A2**
(43) Date of publication of application: **20.08.2025**
(21) Application number: 25180811.9
(22) Date of filing: 04.06.2025
(51) Int. Cl.: H01M 50/209, H01M 50/503, H01M 50/507, H01M 50/522

(54) **CELL CONTACT SYSTEM OF ENERGY STORAGE BATTERY, ENERGY STORAGE BATTERY DEVICE, AND ELECTRICAL APPARATUS**

(30) Priority: 16.05.2025 CN 202510637105
(71) Applicant: Zhejiang Jinko Energy Storage Co., Ltd., Jiaxing, Zhejiang 314415 (CN)
(72) Inventor: SHI, Yanyan, Haining (CN); ZHANG, Luhua, Haining, 314415 (CN); LV, Yuanfu, Haining, 314415 (CN); CHEN, Yuanhang, Haining, 314415 (CN)
(74) Representative: Haseltine Lake Kempner LLP

(57) **Abstract**

The present application relates to a cell contact system of an energy storage battery, an energy storage battery device, and an electrical apparatus. The cell contact system of the energy storage battery includes a conductive aluminum busbar, the conductive aluminum busbar includes a first electric-connecting element and a second electric-connecting element, the first electric-connecting element and the second electric-connecting element have first different specifications configured to provide error-proofing assembly for the cell contact system of the energy storage battery, and a length of a first electric-connecting portion of the first electric-connecting element is different from a length of a second electric-connecting portion of the second electric-connecting element.

## Description

### TECHNICAL FIELD

The present application relates to the field of batteries, particularly to a cell contact system of an energy storage battery, an energy storage battery device, and electrical apparatus.

### BACKGROUND

Cell contact system (CCS) of a battery pack, also known as an integrated busbar, is an essential module in a battery system. Specifically, the CCS, i.e., the CCS module, is an integrated module configured to achieve electric connecting between cells and signal transmission within the battery pack, and to provide mechanical support and protection for the battery pack. In fields such as grid energy storage and distributed energy storage, the CCS in the battery pack enables effective management and connection of a large number of cells, ensuring efficient operation and stable power supply of the energy storage system, thereby improving energy utilization efficiency and electric grid stability.

When connecting multiple rows of cells, multiple CCS modules are also provided. During the assembly process, these multiple CCS modules are easy to be incorrectly assembled, thereby affecting assembly efficiency.

### SUMMARY

In view of this, there is a need to provide a cell contact system of an energy storage battery, an energy storage battery device, and electrical apparatus.

An embodiment of the present application provides a cell contact system of an energy storage battery, including a conductive aluminum busbar,
wherein the conductive aluminum busbar includes a first electric-connecting element and a second electric-connecting element,
the first electric-connecting element and the second electric-connecting element have first different specifications, and the first different specification is configured to provide error-proofing assembly for the cell contact system of the energy storage battery,
a length of a first electric-connecting portion of the first electric-connecting element is different from a length of a second electric-connecting portion of the second electric-connecting element.

In the above cell contact system of the energy storage battery, by designing the first electric-connecting portion and the second electric-connecting portion that have different assembly lengths, the first electric-connecting element and the second electric-connecting element form a practical difference. This difference can be defined easily by assembly and facilitates achieving automated production and inspection processes. Moreover, at least in terms of the first electric-connecting portion and the second electric-connecting portion, the first electric-connecting element and the second electric-connecting element have first different specifications to form an asymmetric error-proofing assembly structure. Therefore, this design exhibits the advantage of a simple structure, thereby improving assembly efficiency and reducing assembly errors, making it easy to popularize and use in production.

In some embodiments, in an extending direction of the conductive aluminum busbar or a transverse direction perpendicular to the extending direction, a difference between the length of the first electric-connecting portion and the length of the second electric-connecting portion is greater than a preset value, and the preset value is a sum of a length tolerance of the conductive aluminum busbar and double fit clearance.

In some embodiments, the first electric-connecting element is configured to be a positive electrode of the conductive aluminum busbar, the second electric-connecting element is configured to be a negative electrode of the conductive aluminum busbar, and the length of the first electric-connecting portion is greater than the length of the second electric-connecting portion.

In some embodiments, a shape of the first electric-connecting element is different from a shape of the second electric-connecting element, or
a shape of the first electric-connecting portion is different from a shape of the second electric-connecting portion.

In some embodiments, a positioning structure of the first electric-connecting element is different from a positioning structure of the second electric-connecting element, and the positioning structure includes a protruding portion or a groove.

In some embodiments, the positioning structures extend through the first electric-connecting element and the second electric-connecting element, respectively, or
the positioning structures are located at an edge of the first electric-connecting element and an edge of the second electric-connecting element, respectively.

In some embodiments, a positioning structure of the first electric-connecting portion is different from a positioning structure of the second electric-connecting portion,
the positioning structures extend through the first electric-connecting portion and the second electric-connecting portion, respectively; or the positioning structures are located at an edge of the first electric-connecting portion and an edge of the second electric-connecting portion, respectively.

In some embodiments, the cell contact system of the energy storage battery further includes a wiring board, and
the wiring board is provided with at least two through-holes, the at least two through-holes are configured to be identified by a charge-coupled device inspection apparatus and to serve as an error-proofing assembly structure for the wiring board.

In some embodiments, the at least two through-holes exhibit different forms in opposite orders along the extending direction of the conductive aluminum busbar.

In some embodiments, the through-holes include a first through-hole and a second through-hole, and the first through hole and the second through hole differ in quantity, positional distribution, or a second different specification, to fit with the first electric-connecting element and the second electric-connecting element, serving as an error-proofing assembly structure for the cell contact system of the energy storage battery.

In some embodiments, the through-holes are configured to expose an explosion-proof valve of a battery cell connected to the conductive aluminum busbar.

In some embodiments, the through-holes include a first through-hole and a second through-hole, an area of the first through hole is different from an area of the second through hole to expose the explosion-proof valve in different quantities.

In some embodiments, the through-holes include a first through hole and a second through-hole, and the first through-hole is configured to expose all explosion-proof valves of a battery cell connected to the conductive aluminum busbar.

In some embodiments, the cell contact system of the energy storage battery further includes an isolation plate, and the isolation plate is disposed on the conductive aluminum busbar.

In some embodiments, the isolation plate has an isolation shape corresponding to the first electric-connecting element and the second electric-connecting element, and the isolation shape is configured to provide error-proofing assembly for the cell contact system of the energy storage battery.

In some embodiments, the cell contact system of the energy storage battery further includes a wiring board, and the wiring board is provided with at least two through-holes, the at least two through-holes are configured to be identified by a charge-coupled device inspection apparatus and to serve as an error-proofing assembly structure for the wiring board;
at least one of the through-holes is a first through hole, and the first through hole is configured to expose at least two explosion-proof valves of the battery cell connected to the conductive aluminum busbar;
the isolation plate is provided with a raised portion, the raised portion is embedded in the first through-hole, and the raised portion is configured to separate adjacent explosion-proof valves.

In some embodiments, the wiring board is disposed on the isolation plate, and the wiring board is positioned between the isolation plate and the conductive aluminum busbar.

In some embodiments, an energy storage battery device includes a battery cell, an end plate, and the cell contact system of the energy storage battery as described in any one of the embodiments;
the conductive aluminum busbar of the cell contact system of the energy storage battery is connected to an electrode of the battery cell;
the end plate is provided with a first electric-connecting base and a second electric-connecting base;
the first electric-connecting element of the conductive aluminum busbar is mounted on the first electric-connecting base, and the second electric-connecting element of the conductive aluminum busbar is mounted on the second electric-connecting base;
an assembly length of the first electric-connecting base is different from an assembly length of the second electric-connecting base to fit with the first electric-connecting portion of the first electric-connecting element and the second electric-connecting portion of the second electric-connecting element.

In the above energy storage battery device, by designing the first electric-connecting portion and the second electric-connecting portion that have different lengths, and cooperating with the first electric-connecting base and the second electric-connecting base that have different assembly lengths, the first electric-connecting element and the second electric-connecting element form an adequate practical difference when they are assembled with the first electric-connecting base and the second electric-connecting base. This difference can be defined easily by assembly and facilitates achieving automated production and inspection processes. Moreover, at least in terms of the first electric-connecting portion and the second electric-connecting portion, the first electric-connecting element and the second electric-connecting element have first different specifications to form an asymmetric error-proofing assembly structure, which can be adaptively mounted on the first electric-connecting base and the second electric-connecting base, respectively. Therefore, this design exhibits the advantage of a simple structure, thereby improving assembly efficiency and reducing assembly errors, making it easy to popularize and use in production.

In some embodiments, the end plate is further provided with an insert element, and the first electric-connecting base and the second electric-connecting base achieve different assembly lengths through different insert elements, respectively;
the first electric-connecting portion is mounted on the first electric-connecting base through one type of the insert element, and the second electric-connecting portion is mounted on the second electric-connecting base through another type of the insert element.

In some embodiments, an electrical apparatus includes the energy storage battery device as described in any one of the embodiments.

### BRIEF DESCRIPTION OF THE DRAWINGS

In order to illustrate the technical solutions in the embodiments of the present application or in conventional technologies more clearly, the drawings used in the embodiments or in conventional technologies will be described briefly. Apparently, the following described drawings are merely for the embodiments of the present application, and other drawings can be derived by those of ordinary skill in the art without any creative effort.
FIG. 1 is a schematic structural view of an energy storage battery device according to an embodiment of the present application.
FIG. 2 is a partial structural view of the embodiment shown in FIG. 1.
FIG. 3 is an exploded structural view of the embodiment shown in FIG. 1.
FIG. 4 is a schematic structural view showing a first electric-connecting element mounted on a first electric-connecting base of the embodiment shown in FIG. 3 viewed from another perspective.
FIG. 5 is a schematic structural view showing a second electric-connecting element mounted on a second electric-connecting base of the embodiment shown in FIG. 3 viewed from another perspective.
FIG. 6 is a schematic view of the embodiment shown in FIG. 1 viewed from another perspective.
FIG. 7 is a schematic view of incorrect assembly of the embodiment shown in FIG. 6.
FIG. 8 is a schematic view of the embodiment shown in FIG. 3 viewed from another perspective.
FIG. 9 is an enlarged schematic view of area A in the embodiment shown in FIG. 8.
FIG. 10 is a schematic structural view of the energy storage battery device according to another embodiment of the present application.
FIG. 11 is an exploded structural view of the embodiment shown in FIG. 10.
FIG. 12 is an enlarged schematic view of area B in the embodiment shown in FIG. 11.
FIG. 13 is a schematic assembly view of partial structure of the embodiment shown in FIG. 10.

### DETAILED DESCRIPTION

The embodiments of the present application will be described in detail with reference to the accompanying drawings in order to make the objects, features, and advantages of the present application more apparent and understandable. Many specific details are disclosed in the following description to facilitate a comprehensive understanding of the present application. However, it should be noted that the present application can be implemented in various ways different from those described herein, and those skilled in the art may make similar improvements without departing from the scope of the present application. Therefore, the present application is not limited to the specific embodiments disclosed below.

It should be noted that when an element is referred to as being "fixed to" or "arranged on" another element, it may be directly disposed on the other element or an intermediate element may exist. When an element is considered to be "connected to" another element, it may be directly connected to the other element or an intermediate element may coexist. The terms "vertical", "horizontal", "upper", "lower", "left", "right" and similar expressions used herein are only for illustrative purposes and are not intended to represent the only implementations.

In addition, the terms "first" and "second" are used for descriptive purposes only, and cannot be construed as indicating or implying a relative importance, or implicitly specifying the number of the indicated technical features. Thus, the quantity of the feature defined with "first" or "second" may explicitly or implicitly be at least one. In the description of the present application, "a plurality of" means at least two, such as two, three, unless otherwise defined explicitly and specifically.

In the present application, unless otherwise specified and defined explicitly, a first feature, when expressed as being "on" or "under" a second feature, may be in direct contact with the second feature or in indirect contact with the second feature via an intermediate medium. Furthermore, a first feature, when expressed as being "over", "above" or "on top of" a second feature, may be located right above or obliquely above the second feature, or only located at a level higher than that of the second feature. A first feature, when expressed as being "below", "underneath" or "under" a second feature, may be located right below or obliquely below the second feature, or only located at a level lower than that of the second feature.

Unless otherwise defined, all technical and scientific terms used herein have the same meaning as commonly understood by those of ordinary skill in the art to which the present application pertains. The terms used in the specification of the present application herein are for the purpose of describing specific embodiments only and are not intended to limit the present application. The term "and/or" used herein includes any and all combinations of one or more of the associated listed items.

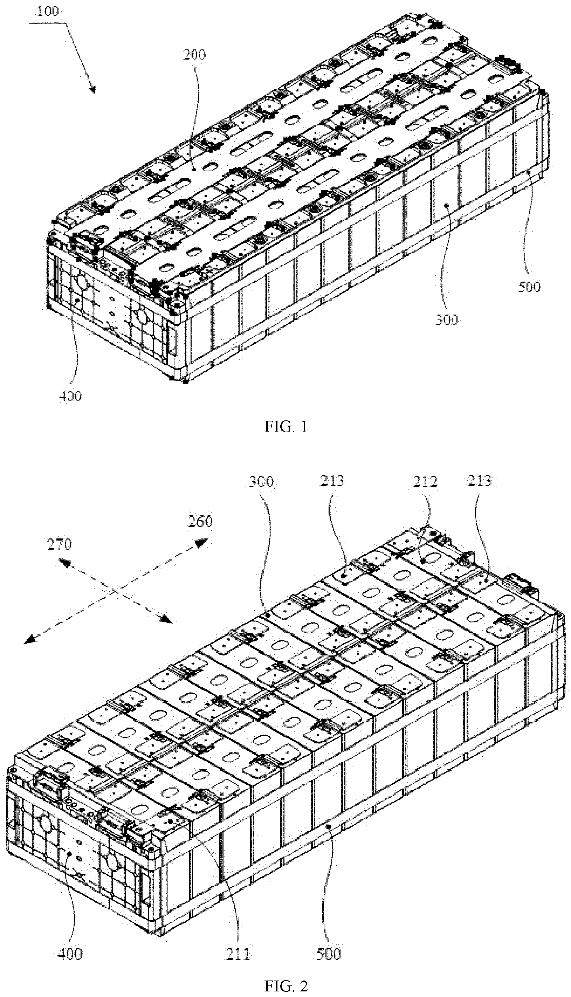

The present application discloses a cell contact system of an energy storage battery, an energy storage battery device, and an electrical apparatus, which include some or all of the technical features of the following embodiments. In an embodiment of the present application, a cell contact system of an energy storage battery includes a conductive aluminum busbar, the conductive aluminum busbar includes a first electric-connecting element and a second electric-connecting element, the first electric-connecting element and the second electric-connecting element have first different specifications, and the first different specification is configured to provide error-proofing assembly for the cell contact system of the energy storage battery, wherein a length of a first electric-connecting portion of the first electric-connecting element is different from a length of a second electric-connecting portion of the second electric-connecting element. In the above cell contact system of the energy storage battery, by designing the first electric-connecting portion and the second electric-connecting portion that have different lengths, the first electric-connecting element and the second electric-connecting element form a practical difference. This difference can be defined easily by assembly and facilitates achieving automated production and inspection processes. Moreover, at least in terms of the first electric-connecting portion and the second electric-connecting portion, the first electric-connecting element and the second electric-connecting element have first different specifications to form an asymmetric error-proofing assembly structure. Therefore, this design exhibits the advantage of a simple structure, thereby improving assembly efficiency and reducing assembly errors, making it easy to popularize and use in production. Referring to FIGS. 1 to 13, the cell contact system of the energy storage battery, the energy storage battery device, and the electrical apparatus are described in detail blow.

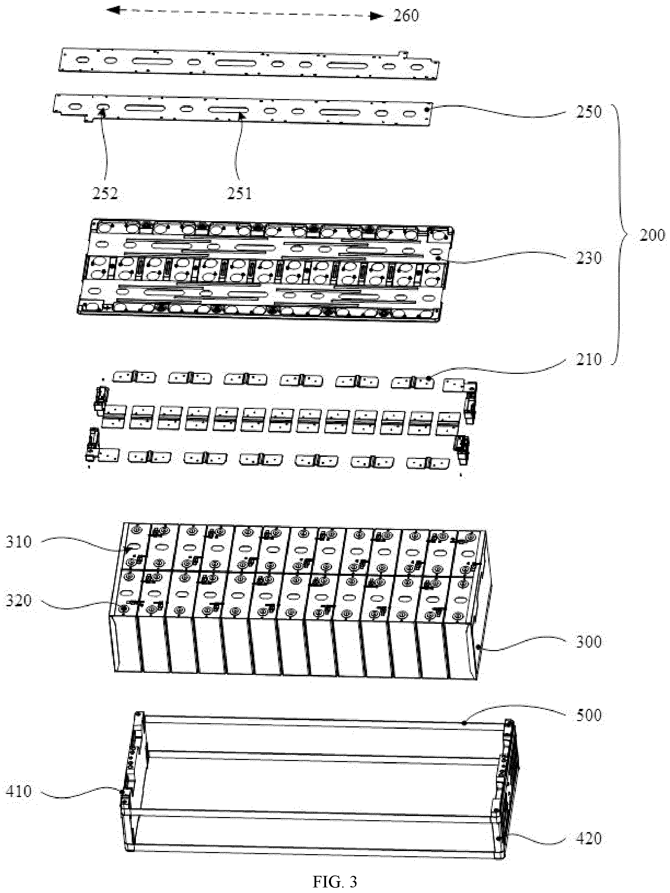

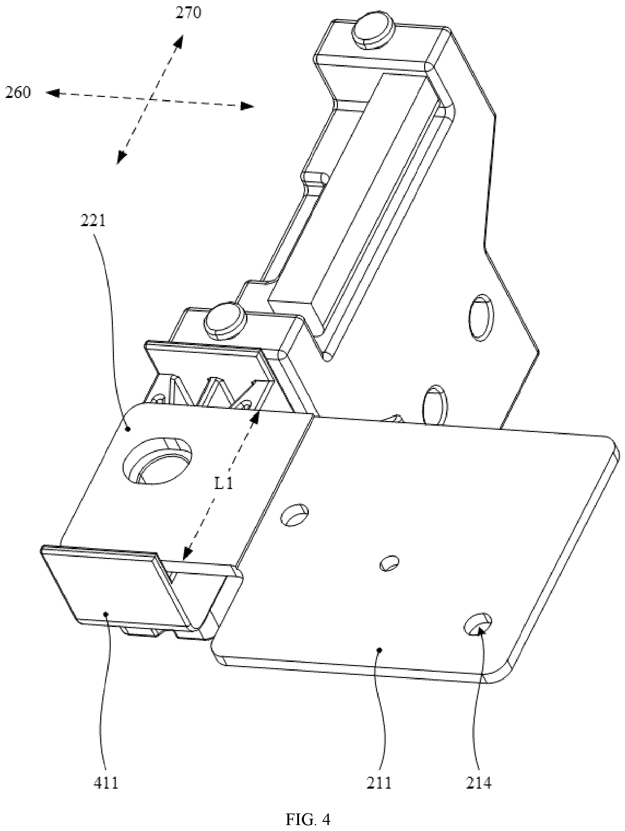

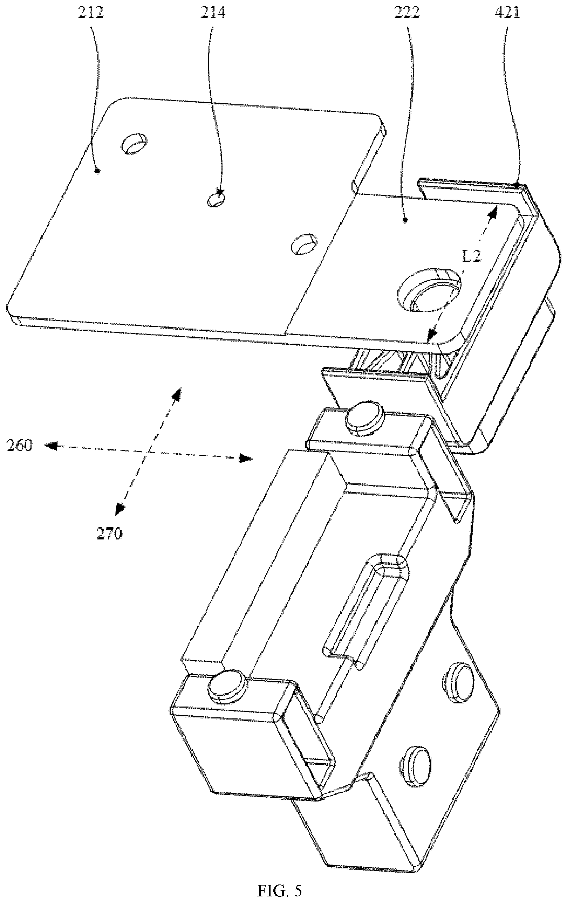

Energy storage battery is a device capable of converting electrical energy into chemical energy for storage and then converting the chemical energy into electrical energy for release when needed. In some embodiments, an energy storage battery device 100 as shown in FIG. 1 includes a battery cell 300, an end plate 400, and a cell contact system 200 of the energy storage battery, where the cell contact system 200 of the energy storage battery is the cell contact system 200 of the energy storage battery in any of the embodiments described herein. In conjunction with FIGS. 2 and 3, a conductive aluminum busbar 210 of the cell contact system 200 of the energy storage battery is connected to an electrode 320 of the battery cell 300. In conjunction with FIGS. 4 and 5, the end plate 400 is provided with a first electric-connecting base 411 and a second electric-connecting base 421. A first electric-connecting element 211 of the conductive aluminum busbar 210 is mounted on the first electric-connecting base 411, and a second electric-connecting element 212 of the conductive aluminum busbar 210 is mounted on the second electric-connecting base 421. The first electric-connecting base 411 and the second electric-connecting base 421 have different assembly lengths to fit with the first electric-connecting portion 221 of the first electric-connecting element 211 and the second electric-connecting portion 222 of the second electric-connecting portion 212. In this design, by designing the first electric-connecting portion 221 and the second electric-connecting portion 222 that have different lengths, and cooperating with the first electric-connecting base 411 and the second electric-connecting base 421 with different assembly lengths, the first electric-connecting element 211 and the second electric-connecting element 212 form an adequate practical difference when they are assembled with the first electric-connecting base 411 and the second electric-connecting base 421. This difference can be defined easily by assembly and facilitates achieving automated production and inspection processes. Moreover, at least in terms of the first electric-connecting portion 221 and the second electric-connecting portion 222, the first electric-connecting element 211 and the second electric-connecting element 212 have first different specifications to form an asymmetric error-proofing assembly structure, which can be adaptively mounted on the first electric-connecting base 411 and the second electric-connecting base 421, respectively. This design exhibits the advantage of a simple structure, thereby improving assembly efficiency and reducing assembly errors, making it easy to popularize and use in production.

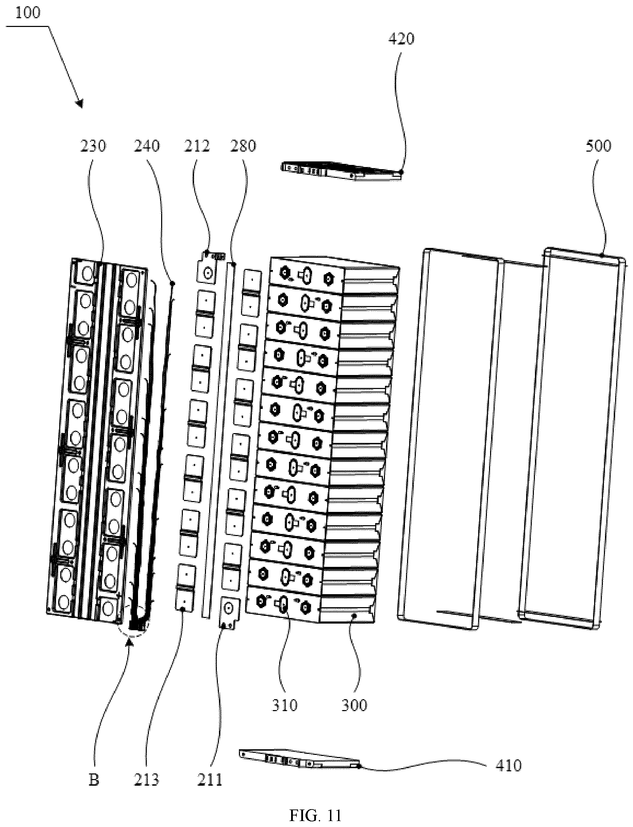

As an example, in conjunction with FIG. 11, the end plate 400 includes a first end plate 410 and a second end plate 420. The first end plate 410 is provided with the first electric-connecting base 411, and the second end plate 420 is provided with the second electric-connecting base 421. As an example, the conductive aluminum busbar 210 further includes a plurality of intermediate connection elements 213. The plurality of intermediate connection elements 213 are connected to the first electric-connecting element 211 and the second electric-connecting element 212. As an example, the first electric-connecting element 211, the plurality of intermediate connection elements 213, and the second electric-connecting element 212 are connected in series sequentially.

As an example, in an embodiment shown in FIGS. 1 to 3, a plurality of battery cells 300 are provided, and the plurality of battery cells 300 are arranged regularly. The regularly arranged battery cells 300 can also be referred to as a battery cell module. As an example, in the embodiment shown in FIGS. 1 to 3, the energy storage battery device 100 further includes a fastening band 500, and the fastening band 500 is configured to securely bind the battery cells 300 and the end plate 400. As an example, the fastening band 500 is a steel band. This design can effectively resist the impact forces and vibrations that the battery cell module may encounter during transportation, installation, and use, preventing external forces, such as mechanical shocks and collisions, from damaging the battery cells 300, thereby protecting the battery cells 300 from damage caused by external mechanical stress and extending the service life of the energy storage battery device 100.

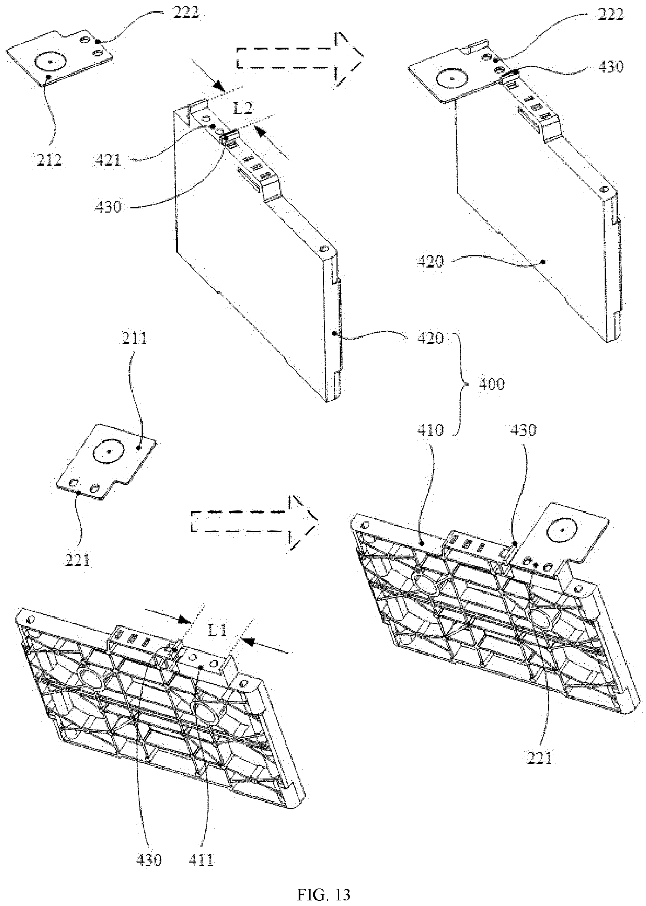

In some embodiments, as shown in FIG. 13, the end plate 400 is further provided with an insert element 430. The first electric-connecting base 411 and the second electric-connecting base 421 achieve different assembly lengths through different insert elements 430, respectively. The first electric-connecting portion 221 is disposed on the first electric-connecting base 411 through one type of the insert element 430, and the second electric-connecting portion 222 is disposed on the second electric-connecting base 421 through another type of the insert element 430. This design achieves different assembly lengths of the first electric-connecting base 411 and the second electric-connecting base 421 through using insert elements 430, enabling more precise control of the mounting position of the electric-connecting element and reducing assembly errors, thereby improving assembly efficiency. Furthermore, in the context of providing the insert elements 430, by changing or adjusting the insert elements, the present embodiment allows the first electric-connecting base 411 and the second electric-connecting base 421 to adapt to electric-connecting elements with different specifications or electric-connecting portions thereof without changing the main structure of the end plate 400, thereby enhancing the flexibility and scalability of the energy storage battery device 100. Moreover, the use of the insert elements 430 simplifies the manufacturing process of the end plate 400, reducing the use of complex molds and thereby lowering production costs. Additionally, the asymmetric error-proofing assembly structure design can be achieved through the cooperation of different insert elements 430, which effectively prevents the two electric-connecting elements or their electric-connecting portions from incorrect mounting, reducing faults caused by assembly errors and improving assembly reliability, thereby enhancing product reliability.

In various embodiments, the specification refers to the form factor, including shape and size, which can also be known as geometric characteristics. For example, in an extending direction 260 of the conductive aluminum busbar 210, the first electric-connecting portion 221 and the second electric-connecting portion 222 have different lengths. Alternatively, in a transverse direction 270 perpendicular to the extending direction 260, the first electric-connecting portion 221 and the second electric-connecting portion 222 have different lengths. The first electric-connecting base 411 and the second electric-connecting base 421 of the end plate 400 have first different specifications respectively corresponding to the first electric-connecting element 211 and the second electric-connecting element 212.

In some embodiments, as shown in FIG. 3, the cell contact system 200 of the energy storage battery includes a conductive aluminum busbar 210. Referring to FIGS. 4 and 5, the conductive aluminum busbar 210 includes the first electric-connecting element 211 and the second electric-connecting element 212. The first electric-connecting element 211 and the second electric-connecting element 212 have first different specifications. The first different specification is configured to provide error-proofing assembly for the cell contact system 200 of the energy storage battery. A length of the first electric-connecting portion 221 of the first electric-connecting element 211 is different from a length of the second electric-connecting portion 222 of the second electric-connecting element 212. In this design, by designing the first electric-connecting portion 221 and the second electric-connecting portion 222 with different lengths, the first electric-connecting element 211 and the second electric-connecting element 212 form a practical difference. This difference can be defined easily by assembly and facilitates achieving automated production and inspection processes. Moreover, at least in terms of the first electric-connecting portion 221 and the second electric-connecting portion 222, the first electric-connecting element 211 and the second electric-connecting element 212 have the first different specifications to form an asymmetric error-proofing assembly structure. Therefore, this design exhibits the advantage of a simple structure, thereby improving assembly efficiency and reducing assembly errors, making it easy to popularize and use in production.

Thus, when assembling the cell contact system 200 of the energy storage battery, the purpose of error-proofing can be achieved by the elements with different widths in the conductive aluminum busbars 210, enhancing the assembly efficiency and reliability of the cell contact system 200 of the energy storage battery. In some embodiments, as shown in FIG. 2 in conjunction with FIGS. 4 and 5, in the extending direction 260 of the conductive aluminum busbar 210 or in the transverse direction 270 perpendicular to the extending direction 260, the difference between the length of the first electric-connecting portion 221 and the length of the second electric-connecting portion 222 is greater than a preset value. This preset value is the sum of the length tolerance of the conductive aluminum busbar 210 and double fit clearance. In other words, the cell contact system 200 of the energy storage battery includes the conductive aluminum busbar 210, and the conductive aluminum busbar 210 includes the first electric-connecting element 211 and the second electric-connecting element 212. The first electric-connecting element 211 and the second electric-connecting element 212 have first different specifications configured to provide error-proofing assembly for the cell contact system 200 of the energy storage battery. The first electric-connecting portion 221 of the first electric-connecting element 211 and the second electric-connecting portion 222 of the second electric-connecting element 212 have different lengths. Moreover, in the extending direction 260 of the conductive aluminum busbar 210 or in the transverse direction 270 perpendicular to the extending direction 260, the difference between the length of the first electric-connecting portion 221 and the length of the second electric-connecting portion 222 is greater than the preset value, which is the sum of the length tolerance of the conductive aluminum busbar 210 and double fit clearance. Other embodiments follow similarly and will not be described repeatedly.

As an example, as shown in FIGS. 4 and 5, in the transverse direction 270, the first electric-connecting portion 221 has a first length L1, and the second electric-connecting portion 222 has a second length L2, where L1 is different from L2 to enable the first electric-connecting portion 221 and the second electric-connecting portion 222 to have different lengths. In the present embodiment, the extending direction 260 of the conductive aluminum busbar 210 corresponds to the extending direction of a wiring board 250 (i.e., a length direction of the wiring board 250). The transverse direction 270 is perpendicular to the extending direction 260 and corresponds to a transverse direction of the wiring board 250. The difference between the length of the first electric-connecting portion 221 and the length of the second electric-connecting portion 222 in the extending direction 260 or the transverse direction 270 is conducive to error-proofing judgment from a length dimension during assembly, thereby improving assembly accuracy. Furthermore, by setting the difference between the length of the first electric-connecting portion 221 and the length of the second electric-connecting portion 222 to be greater than the preset value, the error-proofing assembly function can be more reliably achieved, ensuring effective assembly, and effectively preventing assembly errors caused by factors such as length tolerances and fit clearance, further enhancing assembly accuracy and reliability. Consequently, it reduces production costs and quality risks associated with assembly errors, thereby improving the stability and safety of the cell contact system 200 of the energy storage battery.

In some embodiments, the first electric-connecting element 211 is configured to be a positive electrode of the conductive aluminum busbar 210, and the second electric-connecting element 212 is configured to be a negative electrode of the conductive aluminum busbar 210, and the length of the first electric-connecting portion 221 is greater than the length of the second electric-connecting portion 222. This allows for intuitively distinguishing the positive electrode from the negative electrode, and this length difference enables workers or automated devices to quickly and accurately identify the positive and negative electrodes during assembly, avoiding assembly errors caused by confusion over electrodes. Combined with the embodiment where the difference between the length of the first electric-connecting portion 221 and the length of the second electric-connecting portion 222 is greater than the preset value, this design considers not only the tolerance range in the manufacturing process but also potential fit clearances during assembly, thereby further enhancing the error-proofing assembly function. For example, even in the presence of manufacturing tolerances and assembly gaps, the significant difference between lengths of the first electric-connecting portion 221 and the second electric-connecting portion 222 ensures that the electric-connecting elements as the positive and negative electrodes cannot be mistakenly interchanged, effectively reducing the risk associated with assembly errors.

When applied in automated production lines, this length difference can be quickly identified by mechanical or optical inspection apparatus, enabling automated assembly and quality inspection. Automated apparatus can rapidly determine whether the electric-connecting elements are correctly mounted based on a preset length standard, which further improves production efficiency and the level of quality control. Moreover, this error-proofing design based on length differences has a simple structure, without requiring complex mechanical structures or electronic components to achieve the error-proofing function. It can be achieved by only adjusting the lengths of the electric-connecting portions, making it easy to integrate into existing production processes without the need for additional apparatus or complex process modifications, thereby reducing production costs.

In some embodiments, a shape of the first electric-connecting element 211 is different from a shape of the second electric-connecting element 212. In some embodiments, a shape of the first electric-connecting portion 221 is different from a shape of the second electric-connecting portion 222, meaning the difference between shapes of the first electric-connecting element 211 and the second electric-connecting element 212 is manifested through the first electric-connecting portion 221 and the second electric-connecting portion 222. Exemplarily, the remaining portion of the first electric-connecting element 211 other than the first electric-connecting portion 221 has the same shape as the remaining portion of the second electric-connecting element 212 other than the second electric-connecting portion 222. As an example, the first electric-connecting element 211 is in a rectangular shape, and the second electric-connecting element 212 is in a trapezoidal shape, or vice versa. Alternatively, the first electric-connecting portion 221 is in a rectangular shape, and the second electric-connecting portion 222 is in a trapezoidal shape, or vice versa. By setting the first electric-connecting portion 221 and the second electric-connecting portion 222 to have different shapes, this design ensures that workers or automated apparatus can quickly identify the electric-connecting elements as the positive and negative electrodes through the intuitive shape differences during assembly. These shape differences are more noticeable than mere length differences, further reducing the likelihood of assembly errors. Furthermore, in addition to length differences, shape differences provide another error-proofing mechanism. Even if the length differences are not obvious or are overlooked, the shape differences can still ensure the correct mounting of the electric-connecting elements. This multi-dimensional error-proofing design significantly improves reliability and safety of the system while enhancing assembly efficiency, particularly in large-scale production and automated assembly lines, thereby substantially reducing assembly time.

Exemplarily, the first electric-connecting element 211 or the first electric-connecting portion 221 thereof has a first shape, the second electric-connecting element 212 or the second electric-connecting portion 222 thereof has a second shape, and the first and second shapes are different. The first electric-connecting base 411 of the end plate 400 has a first shape corresponding to the first electric-connecting element 211 or the first electric-connecting portion 221 thereof, and the second electric-connecting base 421 of the end plate 400 has a second shape corresponding to the second electric-connecting element 212 or the second electric-connecting portion 222 thereof. As such, for scenarios requiring relatively high error-proofing requirements, relatively complex shape differences can be designed. For simple application scenarios, relatively simple shape differences can be adopted. This flexibility allows the design to adapt to various usage environments and requirements. By designing shape differences, safety hazards such as short circuits or overheating caused by incorrect electrode connections can be effectively avoided, thereby improving overall system safety. Moreover, this shape-based error-proofing design can be combined with other error-proofing measures to further enhance the error-proofing effect of the system. Further, this design facilitates future technical upgrades and expansions, such as adding new error-proofing functions or modifying existing designs. Furthermore, the shape-difference design can be achieved through simple mold manufacturing and processing techniques, without requiring complex mechanical structures or electronic components. This simple design is easy to implement in existing production processes, reducing production costs and process complexity.

In some embodiments, referring to FIG. 4 and FIG. 5, a positioning structure 214 of the first electric-connecting element 211 is different from a positioning structure 214 of the second electric-connecting element 212, and the positioning structure includes a protruding portion or a groove. In the embodiments shown in FIG. 4 and FIG. 5, the positioning structures 214 of the first electric-connecting element 211 and the second electric-connecting element 212 are grooves and are located in different positions, which are configured for positioning and error-proofing to ensure accurate installation of the first electric-connecting element 211 and the second electric-connecting element 212. In other embodiments other than those shown in the figures, the first electric-connecting element 211 and the second electric-connecting element 212 may also have the same positioning structure 214 to play a positioning role. In some embodiments, the positioning structures extend through the first electric-connecting element 211 and the second electric-connecting element 212, respectively. Alternatively, the positioning structures are located at an edge of the first electric-connecting element 211 and an edge of the second electric-connecting element 212, respectively. Exemplarily, the edge of the first electric-connecting element 211 is provided with a first positioning structure, and the edge of the second electric-connecting element 212 is provided with a second positioning structure. The first positioning structure and the second positioning structure have different shapes and are disposed to be mutually engaging structures to facilitate production and preparation. Exemplarily, the first positioning structure and the second positioning structure, which are mutually engaging structures, can be spliced into a complete rectangle, rounded rectangle, or other shape, ensuring that the middle engagement area appears as a whole shape without gaps after splicing, thereby reducing the need for additional molds and enabling faster production. In this design, the cooperation between the protruding portion and the groove ensures precise positioning of the electric-connecting element during assembly, thereby reducing assembly errors. Meanwhile, the through-type positioning structure or the positioning structure located at the edge can effectively restrict the movement of the electric-connecting element during assembly, ensuring positional accuracy. Therefore, this design is particularly suitable for the energy storage battery device 100 which requires high-precision connections, significantly minimizing poor contact or short circuits caused by assembly deviations. Furthermore, the protruding portion and the groove design of the positioning structure makes the assembly process more intuitive and faster. Assembly workers or automated equipment can complete the assembly through simple alignment operations, which further enhances error-proofing assembly effect while reducing assembly time and complexity. Additionally, the through-type positioning structure provides strong mechanical stability, ensuring that the electric-connecting element does not loosen due to vibration or external forces during long-term use. Meanwhile, the positioning structure located at the edge can effectively prevent the electric-connecting element from misalignments during assembly, further improving stability and reliability of the system. Thus, this design is especially suitable for the energy storage battery device 100 to be operated in complex environments.

Specifically, the positioning structures can be disposed on the first electric-connecting portion 221 of the first electric-connecting element 211 and the second electric-connecting portion 222 of the second electric-connecting element 212. In some embodiments, a positioning structure of the first electric-connecting portion 221 is different from a positioning structure of the second electric-connecting portion 222. The positioning structures extend through the first electric-connecting portion 221 and the second electric-connecting portion 222, respectively. Alternatively, the positioning structures are located at an edge of the first electric-connecting portion 221 and an edge of the second electric-connecting portion 222, respectively. Exemplarily, the edge of the first electric-connecting portion 221 is provided with a first positioning structure, and the edge of the second electric-connecting portion 222 is provided with a second positioning structure. The first positioning structure and the second positioning structure have different shapes and are disposed to be mutually engaging structures to facilitate production and preparation. The specific benefits are the same as described above and will not be described repeatedly herein.

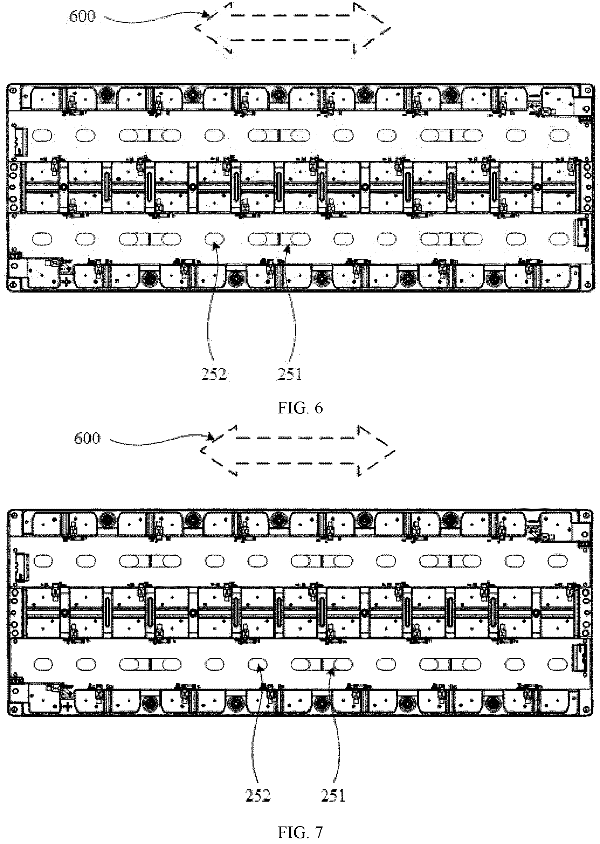

In some embodiments, as shown in FIG. 3 or FIG. 6, the cell contact system 200 of the energy storage battery further includes a wiring board 250. The wiring board 250 is provided with at least two through-holes, the at least two through-holes are configured to be identified by a charge-coupled device inspection apparatus and to serve as an error-proofing assembly structure for the wiring board 250. This design facilitates identification by inspection device, effectively preventing incorrect orientation or misplacement of the wiring board 250 during assembly, thereby ensuring proper mounting of the wiring board 250. Moreover, this error-proofing design further reduces assembly errors caused by human factors, improving the reliability and consistency of the assembly process. Furthermore, the through-holes serve as inspection markers, enabling the charge-coupled device inspection apparatus to quickly and accurately identify the assembly status of the wiring board, reducing inspection time and labor costs. Automated inspection devices can utilize these through-holes for rapid positioning and inspection, enhancing inspection efficiency while minimizing quality issues caused by inaccurate inspection.

In some embodiments, the at least two through-holes exhibit different forms in opposite orders along the extending direction 260 of the conductive aluminum busbar 210. In some embodiments, the through-holes include a first through-hole 251 and a second through-hole 252. The first through-hole 251 and the second through-hole 252 differ in quantity, positional distribution, or a second specification to fit with the first electric-connecting element 211 and the second electric-connecting element 212, serving as an error-proofing assembly structure for the cell contact system 200 of the energy storage battery. This design, by utilizing the difference between forms of the through-holes, effectively prevents the wiring board 250 from incorrect mounting during assembly, and allows assembly workers or automated devices to quickly identify the correct assembly orientation, thereby reducing assembly errors. Moreover, the design of through-holes with different forms makes the assembly process more intuitive and faster. Assembly workers or automated devices can complete assembly through simple alignment operations, reducing assembly time and complexity while further enhancing the error-proofing effect. This design also minimizes rework and repair time caused by assembly errors, thereby improving production efficiency. Additionally, the difference between forms of the through-holes can be quickly identified by the charge-coupled device inspection apparatus, facilitating automated inspection. This not only improves inspection efficiency but also reduces quality issues caused by inaccurate inspection, further enhancing quality control level in the production process.

To improve safety, in some embodiments, the through-hole is configured to expose an explosion-proof valve 310 of the battery cell 300 connected to the conductive aluminum busbar 210. In some embodiments, the through-hole includes the first through-hole 251 and the second through-hole 252, and an area of the first through-hole 251 is different from an area of the second through-hole 252 to expose the explosion-proof valve 310 in different quantities. In some embodiments, the through-hole comprises the first through hole 251 and the second through-hole 252, and the first through-hole 251 is configured to expose all explosion-proof valves 310 of the battery cell 300 connected to the conductive aluminum busbar 210, that is, the second through-hole 252 does not require to expose the explosion-proof valve 310. In other words, for embodiments of the energy storage battery devices 100, the explosion-proof valve 310 of the battery cell 300 is exposed outside the wiring board 250 through the through-hole. In this design, by exposing the explosion-proof valve 310 through the through-hole, the explosion-proof valve 310 can be quickly inspected or maintained when needed, and a buffer space can be provided for the explosion-proof valve 310, thereby reducing the risk of system failure caused by explosion-proof valve malfunctions, and thus improving the reliability of the energy storage battery device 100 or the cell contact system 200 of the energy storage battery. Moreover, the first through-hole 251 and the second through-hole 252 have different areas, which can be flexibly designed according to different configurations of the battery cells 300 and the quantity of the explosion-proof valve 310, thereby further enhancing the error-proofing effect. This design also reduces rework and repair time caused by assembly errors, thereby improving production efficiency.

Thus, by providing the through-hole on the wiring board 250, an asymmetric hole-based error-proofing design can be achieved. During the assembly of the cell contact system 200 of the energy storage battery, inspection can be implemented using automatic inspection methods. The following provides an example explanation of photo inspection. In some embodiments, as shown in FIGS. 6 and 7, an inspection system or apparatus is pre-stored with a correct mounting image of the wiring board 250 as a template, and key positions in the template are selected as feature points. After the mounting process of the wiring board 250 of the cell contact system 200 of the energy storage battery is completed, a photo is taken to obtain the current mounting image, which is automatically compared with the template. Combined with the charge-coupled device (CCD) for judgment, assembly efficiency can be further improved. In other words, for the same product, for example, the design of asymmetric through-holes presenting different forms, allow identification by the charge-coupled device inspection apparatus, and serves as an error-proofing assembly structure for the wiring board 250. As an example, when the cell contact system 200 of the energy storage battery as shown in FIG. 6 is inspected according to the inspection direction 600, it is judged as correctly mounted, Thus, the inspection apparatus does not trigger an alarm or treatment, and the cell contact system is transported to a welding station for welding components. However, when the cell contact system 200 of the energy storage battery as shown in FIG. 7 is inspected according to the inspection direction 600, it is judged as incorrectly mounted. Thus, the inspection apparatus triggers an alarm and performs a rejection treatment, preventing the component from proceeding to the welding station. In this way, by utilizing the error-proofing structure, during CCS assembly, the asymmetric through-hole design is combined with CCD image identification and inspection to prevent incorrectly assembled CCS from reaching the welding station. This avoids unnecessary rework and waste, improves efficiency and reliability of CCS assembly, and thus significantly enhances production efficiency and assembly reliability.

The error-proofing design for the cell contact system 200 of the energy storage battery is further exemplarily explained below. In various embodiments, in the cell contact system 200 of the energy storage battery, the length of the first electric-connecting portion 221 is different from the length of the second electric-connecting portion 222, thereby designing a first type of error-proofing structure based on different widths. By fitting with different reserved widths of the positive and negative electrode bases at corresponding positions of the end plate 400, during assembly, these different width structures are used to align with the different reserved width structures of the positive and negative electrode bases at corresponding positions of the end plate 400, achieving error-proofing assembly and thereby improving assembly efficiency and reliability. Thus, the error-proofing structure is disposed on the output positive and negative electrodes of the CCS, and the corresponding two end plates 400 are disposed to be different structures, achieving the purpose of error-proofing assembly.

Exemplarily, referring to FIG. 13, the first electric-connecting base 411 is snap-fitted with the first electric-connecting element 211 or the first electric-connecting portion 221, and the second electric-connecting base 421 is snap-fitted with the second electric-connecting element 212 or the second electric-connecting portion 222. Moreover, the first electric-connecting base 411 and the second electric-connecting base 421 differ in groove size. That is, the sizes of the grooves of the first electric-connecting base 411 and the second electric-connecting base 421 are different. The first electric-connecting base 411 is configured to install the first electric-connecting portion 221 of the first electric-connecting element 211. The first electric-connecting portion 221 has a first length L1. The second electric-connecting base 421 is configured to install the second electric-connecting portion 222 of the second electric-connecting element 212. The second electric-connecting portion 222 has a second length L2. The first length L1 is different from the second length L2. Since the difference between the first length L1 and the second length L2 is small, for example, the difference is at the millimeter level, the sizes of the grooves of the first electric-connecting base 411 and the second electric-connecting base 421 are similar in FIG. 13. Furthermore, the lengths of the grooves of the first electric-connecting base 411 and the second electric-connecting base 421 in FIG. 13 are respectively indicated as the first length L1 and the second length L2. In actual operation, a fit clearance is usually required, that is, the length of the groove of the first electric-connecting base 411 is slightly greater than the first length L1, and the length of the groove of the second electric-connecting base 421 is slightly greater than the second length L2, so as to facilitate assembly while maintaining an error-proofing design. In other embodiments not shown in the figures, the first electric-connecting base 411 and the second electric-connecting base 421 have different groove shapes. Alternatively, the first electric-connecting base 411 and the second electric-connecting base 421 have both different groove sizes and different groove shapes. As an example, the end plate 400 is designed with an asymmetric shape, for example, the first electric-connecting base 411 is in a rectangular shape and the second electric-connecting base 421 is in a trapezoidal shape. Alternatively, notches or protrusions with different shapes are disposed on the edges of the end plate 400. Such designs, when combined with the first electric-connecting element 211 and the second electric-connecting element 212, achieve the error-proofing effect.

As an example, the CCS or the wiring board 250 thereof is provided with an asymmetric hole structure, i.e., the through-hole, which serves as a second type of error-proofing structure. The through-hole structure is configured to expose the explosion-proof valve 310 of the battery cell 300. The asymmetric through-hole structure includes, but is not limited to, different hole sizes, different hole shapes, and different numbers of explosion-proof valves exposed by the through-hole structure. As an example, a large through-hole is disposed in the CCS to expose all corresponding explosion-proof valves, and a small section is left at a side of the large through-hole for error-proofing or inspection.

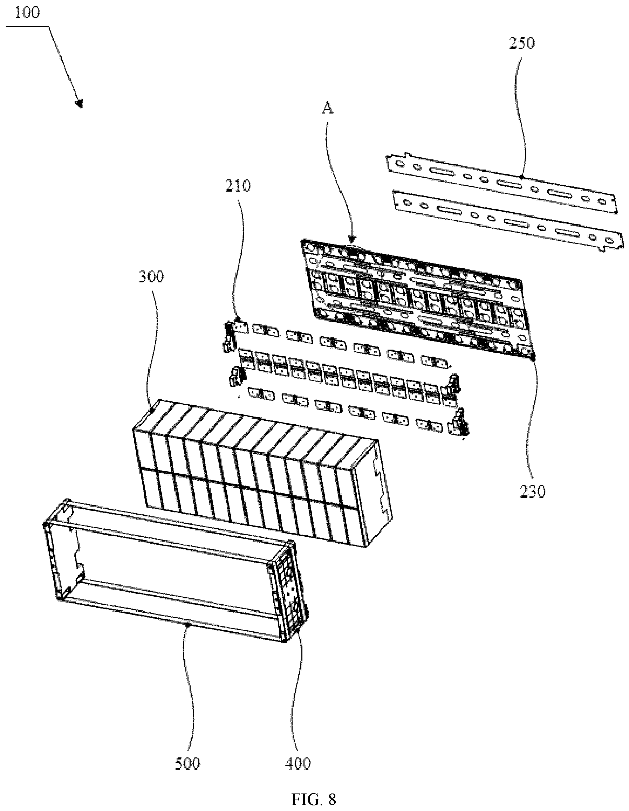

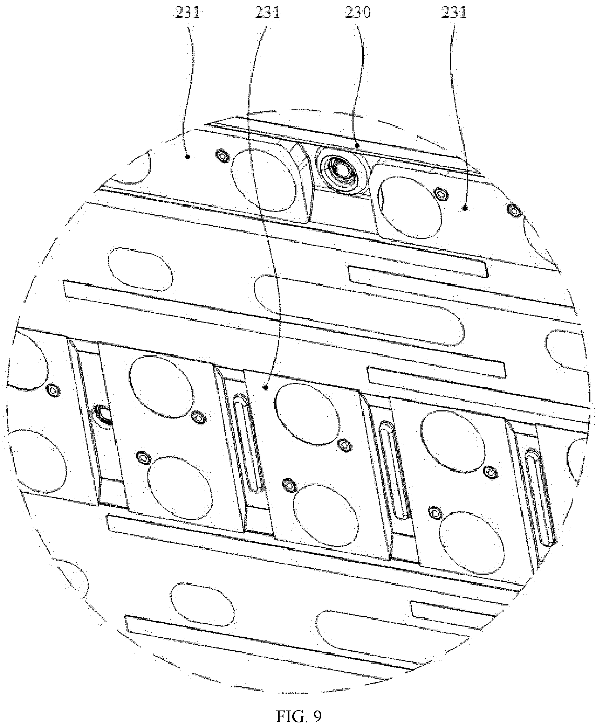

In some embodiments, as shown in FIGS. 8 and 9, the cell contact system 200 of the energy storage battery further includes an isolation plate 230, and the isolation plate 230 is disposed on the conductive aluminum busbar 210. In some embodiments, the wiring board 250 is disposed on the isolation plate 230, and the wiring board 250 is positioned between the isolation plate 230 and the conductive aluminum busbar 210 in the transverse direction 270. That is, in embodiments that include the wiring board 250, the isolation plate 230 is disposed on the conductive aluminum busbar 210, and the wiring board 250 is disposed on the isolation plate 230, meaning that the isolation plate 230 is disposed between the wiring board 250 and the conductive aluminum busbar 210. In this design, the isolation plate 230 is placed on the conductive aluminum busbar 210, which can effectively achieve physical isolation (e.g., preventing spraying), thereby enhancing the safety performance of the cell contact system 200 of the energy storage battery. Moreover, the position of the conductive aluminum busbar 210 can be fixed, preventing displacement or deformation during assembly and use. Additionally, the isolation plate 230 can provide additional support for the conductive aluminum busbar 210, improving the mechanical stability of the cell contact system 200 of the energy storage battery, and reducing damage caused by external forces or vibrations.

In some embodiments, the isolation plate 230 has an isolation shape corresponding to the first electric-connecting element 211 and the second electric-connecting element 212, and the isolation shape is configured to provide error-proofing assembly for the cell contact system 200 of the energy storage battery. In this design, the isolation shape of the isolation plate 230 corresponds to the shapes of the first electric-connecting element 211 and the second electric-connecting element 212, which ensures that only correct mounting can be performed during assembly. This design avoids incorrect assembly orientations by using physical structures, effectively preventing short circuits or other electrical faults caused by assembly errors. Additionally, the isolation plate 230 can also serve as a positioning reference during assembly. Through precise matching with the isolation shape, assembly workers or automated equipment can quickly identify the correct assembly position, reducing error rates during assembly. Moreover, since the likelihood of assembly errors is reduced, the time required for post-assembly inspection and calibration is also shortened, further improving production efficiency.

As an example, the CCS is provided with a spray isolation plate, and the spray isolation plate is configured to isolate sprayed electrolyte and prevent it from spreading. In cases where multiple explosion-proof valves 310 correspond to the same hole, a raised portion can be provided on the side of the spray isolation plate facing the battery cell. The raised portion is configured to separate two adjacent explosion-proof valves.

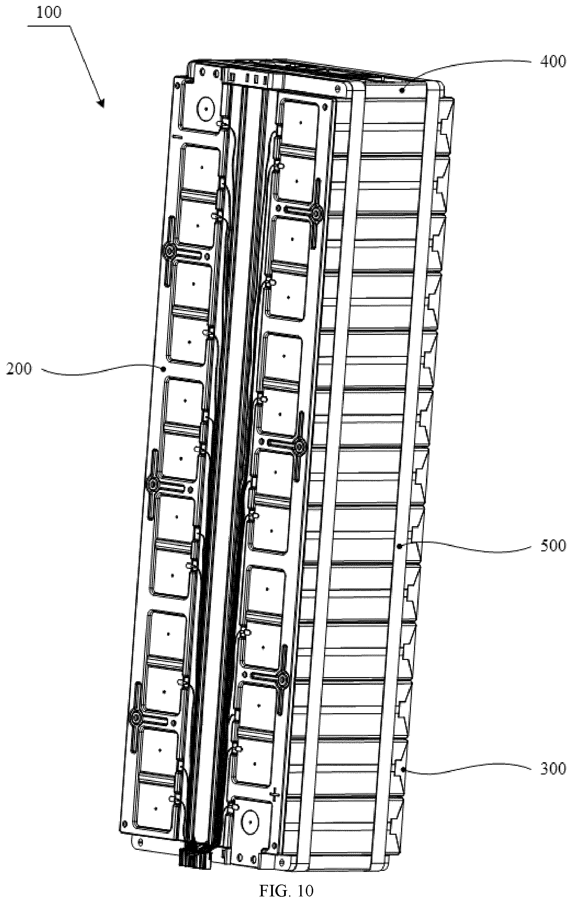

In some embodiments, referring to FIGS. 10 and 11, the cell contact system 200 of the energy storage battery further includes the wiring board 250. The wiring board 250 is provided with at least two through-holes, the at least two through-holes are configured to be identified by the charge-coupled device inspection apparatus, serving as an error-proofing assembly structure for the wiring board 250. At least one through-hole is the first through-hole 251, which is configured to expose at least two explosion-proof valves 310 of the battery cell 300 connected to the conductive aluminum busbar 210. The isolation plate 230 is provided with a raised portion 231 embedded in the first through-hole 251, and the raised portion 231 is configured to separate adjacent explosion-proof valves 310. In some other embodiments, other through-holes, such as the second through-hole 252, can be configured to expose the explosion-proof valve 310, or be configured to cover the explosion-proof valve 310; or the second through-hole 252 is configured to avoid the explosion-proof valve 310. As an example, the first through-hole 251 is configured to expose at least two explosion-proof valves 310, and the second through-hole 252 is configured to expose at most one explosion-proof valve 310. Exemplarily, each through-hole is configured to expose at least two explosion-proof valves 310. Compared to embodiments where one through-hole exposes one explosion-proof valve 310, embodiments where one through-hole exposes at least two explosion-proof valves 310 are conducive to improving the flexibility of the isolation plate 230 in the CCS. The battery cell 300 undergoes volume expansion and contraction during charging and discharging, and this phenomenon is more pronounced in particularly high-energy-density cells. The isolation plate 230 with good flexibility can better adapt to the deformation of the battery cell 300, preventing the isolation plate 230 from cracking or damage caused by expansion of the battery cell 300, and enabling the isolation plate 230 to maintain good isolation performance. Additionally, when a battery module containing the battery cell 300 is subjected to vibration and impact, the isolation plate 230 with good flexibility provides better cushioning effect, which is conducive to absorbing vibrational energy, thereby reducing the risk of damage to the battery cell 300, and improving the stability of the battery module, such as the energy storage battery device 100.

Exemplarily, the isolation plate 230 is provided with a slot corresponding to the through-hole, and the slot is configured to expose the corresponding through-hole, so that the slot cooperates with the corresponding through-hole to collectively expose the explosion-proof valve 310 of the battery cell 300 connected to the conductive aluminum busbar 210. Additionally, the isolation plate 230 is provided with a raised portion 231 at the edge of the slot, and the raised portion 231 is embedded in the first through-hole 251. In this design, by disposing the raised portion 231 on the isolation plate 230 to separate two adjacent explosion-proof valves 310, when thermal runaway occurs in the battery cell 300, thermal runaway or damage in adjacent battery cells 300 can be prevented. Furthermore, at least two through-holes on the wiring board 250 are configured to be identified by the charge-coupled device inspection apparatus, ensuring that the wiring board can be correctly mounted during assembly, preventing faults caused by assembly errors. Combined with the raised portion 231 of the isolation plate 230 embedded in the first through-hole 251, assembly accuracy can be further enhanced, preventing incorrect connection between the wiring board and the conductive aluminum busbar 210. Moreover, the raised portion 231 is configured to separate adjacent explosion-proof valves 310. and it not only provides buffer space but also prevents mutual interference between explosion-proof valves when combined with the embodiment having the slot, which further improves the safety of the cell contact system 200 of the energy storage battery, thereby enhancing the safety of the energy storage battery device 100 adopting the cell contact system 200 of the energy storage battery. Additionally, the fitting between the through-hole and the raised portion 231 makes the assembly process more intuitive and faster, reducing assembly time and complexity. By preventing assembly errors and ensuring accessibility of explosion-proof valves, it reduces the risk of system failure caused by assembly errors or explosion-proof valve malfunctions.

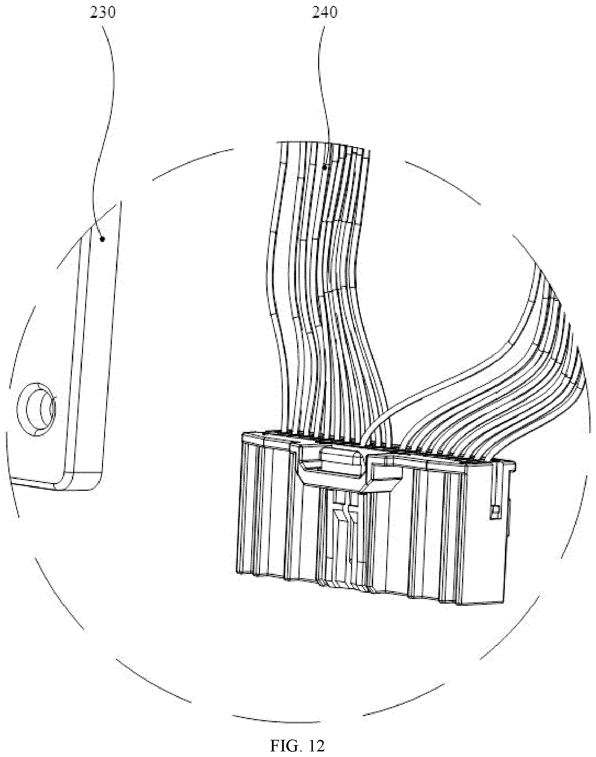

In some embodiments, as shown in FIGS. 11 and 12, the cell contact system 200 of the energy storage battery further includes a wiring harness 240 configured to connect the wiring board 250 to the battery cell 300. The wiring harness 240 is configured to transmit electrical signals from each battery cell 300 to the wiring board 250. As an example, in an embodiment shown in FIG. 11, the cell contact system 200 of the energy storage battery further includes a fixing element 280 configured to secure the battery cells 300 to each other.

In some embodiments, an electrical apparatus includes the energy storage battery device 100 according to any of the embodiments. It should be understood that, since the electrical apparatus includes the energy storage battery device 100 according to any one of the embodiments, it also possesses the beneficial effects corresponding to that of the energy storage battery device 100 according to any one of the embodiments, as well as the beneficial effects of the energy storage battery device 100 employing the cell contact system 200 of the energy storage battery according to any one of the embodiments, which will not be described repeatedly herein. As examples, the electrical apparatus includes a solar power generation system, a wind power generation system, a grid peak-shaving and frequency-regulation apparatus, a backup power supply, an uninterruptible power supply, etc.

It should be noted that other embodiments of the present application also include the cell contact system of the energy storage battery, the energy storage battery device, and the electrical apparatus that are implementable and are formed by combining the technical features described in the above embodiments.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. Therefore, the patent protection of the present application shall be defined by the appended claims.

## Claims

1. A cell contact system (200) of an energy storage battery, comprising a conductive aluminum busbar (210),
wherein the conductive aluminum busbar (210) comprises a first electric-connecting element (211) and a second electric-connecting element (212),
the first electric-connecting element (211) and the second electric-connecting element (212) have first different specifications, and the first different specification is configured to provide error-proofing assembly for the cell contact system (200) of the energy storage battery,
a length of a first electric-connecting portion (221) of the first electric-connecting element (211) is different from a length of a second electric-connecting portion (222) of the second electric-connecting element (212).

2. The cell contact system (200) of the energy storage battery according to claim 1, wherein in an extending direction (260) of the conductive aluminum busbar (210) or a transverse direction (270) perpendicular to the extending direction (260), difference between the length of the first electric-connecting portion (221) and the length of the second electric-connecting portion (222) is greater than a preset value, and the preset value is a sum of a length tolerance of the conductive aluminum busbar (210) and double fit clearance.

3. The cell contact system (200) of the energy storage battery according to claim 1 or 2, wherein the first electric-connecting element (211) is configured to be a positive electrode of the conductive aluminum busbar (210), the second electric-connecting element (212) is configured to be a negative electrode of the conductive aluminum busbar (210), and the length of the first electric-connecting portion (221) is greater than the length of the second electric-connecting portion (222).

4. The cell contact system (200) of the energy storage battery according to any one of claims 1 to 3, wherein a shape of the first electric-connecting element (211) is different from a shape of the second electric-connecting element (212), or
a shape of the first electric-connecting portion (221) is different from a shape of the second electric-connecting portion (222).

5. The cell contact system (200) of the energy storage battery according to any one of claims 1 to 4, wherein a positioning structure (214) of the first electric-connecting element (211) is different from a positioning structure (214) of the second electric-connecting element (212), and the positioning structure comprises a protruding portion or a groove.

6. The cell contact system (200) of the energy storage battery according to claim 5, wherein the positioning structures extend through the first electric-connecting element (211) and the second electric-connecting element (212), respectively, or
the positioning structures are located at an edge of the first electric-connecting element (211) and an edge of the second electric-connecting element (212), respectively.

7. The cell contact system (200) of the energy storage battery according to claim 5 or 6, wherein a positioning structure of the first electric-connecting portion (221) is different from a positioning structure of the second electric-connecting portion (222),
the positioning structures extend through the first electric-connecting portion (221) and the second electric-connecting portion (222), respectively, or
the positioning structures are located at an edge of the first electric-connecting portion (221) and an edge of the second electric-connecting portion (222), respectively.

8. The cell contact system (200) of the energy storage battery according to any one of claims 1 to 7, wherein the cell contact system (200) of the energy storage battery further comprises a wiring board (250), and
the wiring board (250) is provided with at least two through-holes, the at least two through-holes are configured to be identified by a charge-coupled device inspection apparatus and to serve as an error-proofing assembly structure for the wiring board (250);
optionally, the at least two through-holes exhibit different forms in an order along the extending direction (260) of the conductive aluminum busbar (210);
optionally, the through-holes comprise a first through-hole (251) and a second through-hole (252), and the first through hole (251) and the second through hole (252) differ in quantity, positional distribution, or a second different specification, to fit with the first electric-connecting element (211) and the second electric-connecting element (212), serving as an error-proofing assembly structure for the cell contact system (200) of the energy storage battery.

9. The cell contact system (200) of the energy storage battery according to claim 8, wherein the through-holes are configured to expose an explosion-proof valve (310) of a battery cell (300) connected to the conductive aluminum busbar (210).

10. The cell contact system (200) of the energy storage battery according to claim 9, wherein the through-holes comprise a first through-hole (251) and a second through-hole (252), an area of the first through hole (251) is different from an area of the second through hole (252) to expose the explosion-proof valve (310) in different quantities; or
the through-holes comprise a first through hole (251) and a second through-hole (252), and the first through-hole (251) is configured to expose all explosion-proof valves (310) of a battery cell (300) connected to the conductive aluminum busbar (210).

11. The cell contact system (200) of the energy storage battery according to any one of claims 1 to 10, further comprising an isolation plate (230), and the isolation plate (230) is disposed on the conductive aluminum busbar (210).

12. The cell contact system (200) of the energy storage battery according to claim 11, wherein the isolation plate (230) has an isolation shape corresponding to the first electric-connecting element (211) and the second electric-connecting element (212), and the isolation shape is configured to provide error-proofing assembly for the cell contact system (200) of the energy storage battery.

13. The cell contact system (200) of the energy storage battery according to claim 11 or 12, further comprising a wiring board (250), and the wiring board (250) is provided with at least two through-holes, the at least two through-holes are configured to be identified by a charge-coupled device inspection apparatus and to serve as an error-proofing assembly structure for the wiring board (250),
at least one of the through-holes is a first through hole (251), and the first through hole (251) is configured to expose at least two explosion-proof valves (310) of the battery cell (300) connected to the conductive aluminum busbar (210),
the isolation plate (230) is provided with a raised portion (231), the raised portion (231) is embedded in the first through-hole (251), and the raised portion (231) is configured to separate adjacent explosion-proof valves (310);
optionally, the wiring board (250) is disposed on the isolation plate (230), and the wiring board (250) is positioned between the isolation plate (230) and the conductive aluminum busbar (210).

14. An energy storage battery device (100), comprising a battery cell (300), an end plate (400), and the cell contact system (200) of the energy storage battery according to any one of claims 1 to 13;
the conductive aluminum busbar (210) of the cell contact system (200) of the energy storage battery is connected to an electrode (320) of the battery cell (300);
the end plate (400) is provided with a first electric-connecting base (411) and a second electric-connecting base (421);
the first electric-connecting element (211) of the conductive aluminum busbar (210) is mounted on the first electric-connecting base (411), and the second electric-connecting element (212) of the conductive aluminum busbar (210) is mounted on the second electric-connecting base (421); an assembly length of the first electric-connecting base (411) is different from an assembly length of the second electric-connecting base (421) to fit with the first electric-connecting portion (221) of the first electric-connecting element (211) and the second electric-connecting portion (222) of the second electric-connecting element (212);
optionally, the end plate (400) is further provided with an insert element (430), and the first electric-connecting base (411) and the second electric-connecting base (421) achieve different assembly lengths through different insert elements (430), respectively,
the first electric-connecting portion (221) is mounted on the first electric-connecting base (411) through one type of the insert element (430), and the second electric-connecting portion (222) is mounted on the second electric-connecting base (421) through another type of the insert element (430).

15. An electrical apparatus, comprising the energy storage battery device (100) according to claim 14.
